# EUROPEAN PATENT APPLICATION

(11) **EP 2 881 901 A1**
(43) Date of publication of application: **10.06.2015**
(21) Application number: 13290308.9
(22) Date of filing: 09.12.2013
(51) Int. Cl.: G06Q 10/02, G06Q 50/14

(54) **Automated refund of travel document subsequent to involuntary exchange**

(71) Applicant: Amadeus S.A.S., 06410 Biot (FR)
(72) Inventor: Collendavelloo, Yan, NSW 2000 Haymarket (AU); Laffitte, Anatole, 06370 Mouans-Sartoux (FR); Vernet, Jérôme, 06270 Villeneuve Loubet (FR); Philippon, Jeremy, 06520 Magagnosc (FR); Pattard, Pierre, 06700 St Laurent du Var (FR)
(74) Representative: Samson & Partner Patentanwälte mbB

(57) **Abstract**

A method, apparatus and program product automatically perform a refund operation for an involuntary exchange document. The refund operation utilizes monetary information from an original document from which the involuntary exchange document was generated in determining the refund amount. By doing so, the refund operation may be automated, thereby reducing the required expertise and/or training for an end user such as an agent, and further reducing the amount of time required to complete the refund operation.

## Description

### Field of the Invention

Embodiments of the invention relate generally to computers and computer software, and more specifically, to the use of same to apply refunds in the travel industry.

### Background of the Invention

Computer reservations systems are used in the travel industry to store and retrieve information and conduct transactions related to air travel, rail travel, hotels, car rental, and other travel-related activities. An important component of such systems is related to ticketing, which is the process of issuing and managing tickets, the documents issued by travel providers to confirm a traveler's purchase of a travel product such a seat on a flight on an aircraft. Documents managed by an electronic ticketing system for use with air travel, for example, may include paper tickets, electronic tickets (e-tickets), and Electronic Miscellaneous Documents (EMD's), the latter of which are used to document ancillary revenue for services such as excess baggage fees, on-board food and services, and other services that are beyond the scope of the an electronic ticket for a flight between an origin and a destination.

In some instances, however, a traveler may not consume all of the services associated with a document (e.g., a ticket or EMD), so many computer reservations systems support functionality for processing refunds of all or a portion of the services associated with a document. Refund operations, in particular, are used to return, to the owner of a document, the remaining value associated with any unused travel-related services associated with the document, and typically, to renounce the unused travel-related services (e.g., to permit another traveler to book a seat that has been refunded for another traveler).

Processing a refund, however, has often been a difficult and time consuming operation, even for skilled travel or provider agents. Travel providers often apply penalties for refunds, and in some instances, refunds may have tax implications that complicate the calculation of the appropriate amount to refund to a traveler. Travelers may also use multiple forms of payment to pay for a ticket, further complicating the manner in which a refund is returned to the traveler. In many instances, refunds are governed by travel provider rules, e.g., as defined by Airline Tariff Publishing Company (ATPCO) Category 33.

Furthermore, some refund operations are more complex than others, and introduce additional difficulties to the process. As one example, some refunds are associated with involuntary exchanges in a traveler's itinerary. Involuntary exchanges may occur, for example, in response to weather conditions, mechanical issues, worker strikes, or other situations where a traveler must be rebooked on a different flight or other form of transportation, and are often made at no additional charge to the traveler. In such situations, once the traveler is rebooked on a different flight, a new document is issued for the new flight. After rebooking, however, the data in the original document is no longer valid, so if the traveler wishes to request a refund (e.g., in the case that the traveler decides to make alternate plans after a disruption occurs), processing the refund has additional complexities. Given also that involuntary exchanges often occur at the last minute and can affect numerous travelers, the burden on travel provider agents, in particular, can be great as long lines of travelers are forced to wait to make alternate arrangements after a disruption.

Therefore, a significant need exists in the art for improved handling of refund operations for travel-related documents, and in particular, for travel-related documents associated with involuntary exchanges.

### Summary of the Invention

The invention addresses these and other problems associated with the prior art by providing in one aspect a method, apparatus and program product that automatically perform a refund operation for an involuntary exchange document. The refund operation utilizes monetary information from an original document from which the involuntary exchange document was generated in determining the refund amount. By doing so, the refund operation may be automated, thereby reducing the required expertise and/or training for an end user such as an agent, and further reducing the amount of time required to complete the refund operation.

Therefore, consistent with one aspect of the invention, an automated refund for an involuntary exchange document is performed by, in response to a request to initiate a refund for a travel document, determining that the travel document is an involuntary exchange document, accessing monetary information for an original document from which the involuntary exchange document was generated, and automatically determining a refund amount for the involuntary exchange document based upon the accessed monetary information for the original document.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

### Brief Description of the Drawings

FIGURE 1 is a block diagram of a computer system configured to implement a refund service consistent with the invention.
FIGURE 2 is a block diagram of an example implementation of a computer system capable of implementing the refund service referenced in Fig. 1.
FIGURE 3 is an illustration of an example refund record for a travel document.
FIGURES 4 and 5 respectively illustrate example original and involuntary exchange documents.
FIGURE 6 is a flowchart illustrating an example sequence of steps performed by the computer system referenced in Fig. 1 to perform an involuntary exchange refund operation consistent with the invention.
FIGURE 7 illustrates an example disruption and involuntary exchange that affects only a portion of the remaining coupons of a travel document.
FIGURE 8 illustrates an example disruption and involuntary exchange that affects all of the remaining coupons of a travel document.

### Detailed Description

Embodiments consistent with the invention provide an automated refund operation for an involuntary exchange document in which monetary information for an original document from which the involuntary exchange document was generated is accessed and used to determine a refund amount for the refund operation. An involuntary exchange refund operation in some embodiments of the invention may be performed when it is identified in a refund request that the travel document to be refunded is an "involuntary exchange document" that has resulted from an involuntary exchange of another document, referred to herein as an "original document." In some embodiments, the involuntary exchange document may include a flag or other identifier that indicates this status for the document, although other mechanisms for identifying a document as an involuntary exchange document may be used in other embodiments. Then, when a refund operation is initiated for such a document, the status of the document may be identified, indicating that the monetary data in the document may not be accurate, and that monetary data from the original document may need to be accessed.

Thus, in some embodiments of the invention, an involuntary exchange refund operation accesses an original document associated with an involuntary exchange document and utilizes the monetary data (e.g., fares paid, taxes, etc.) from that original document, such that even though the refund operation is performed on the involuntary exchange document, the monetary data from the original document is substituted for the monetary data for the involuntary exchange document, e.g., when accessing a pricing engine to compute a refund amount.

In addition, in some embodiments, a refund operation commits refunds on both the involuntary exchange document and the original document, setting the coupons in both documents having an "Open" status to a "Refunded" status. Further, in some instances, where multiple involuntary exchanges exist in a document chain, all of the coupons throughout the chain having an "Open" status may be updated to a "Refunded" status as well.

In some embodiments, for example, the involuntary exchange document may include a document identifier for the original document to enable a refund service or other functionality implementing the refund operation to identify the original document. Note, in some instances several documents may be involved, so a refund operation may be required to step back through a chain of multiple documents in order to perform a refund.

Other variations and modifications will be apparent to one of ordinary skill in the art.

### Hardware and Software Environment

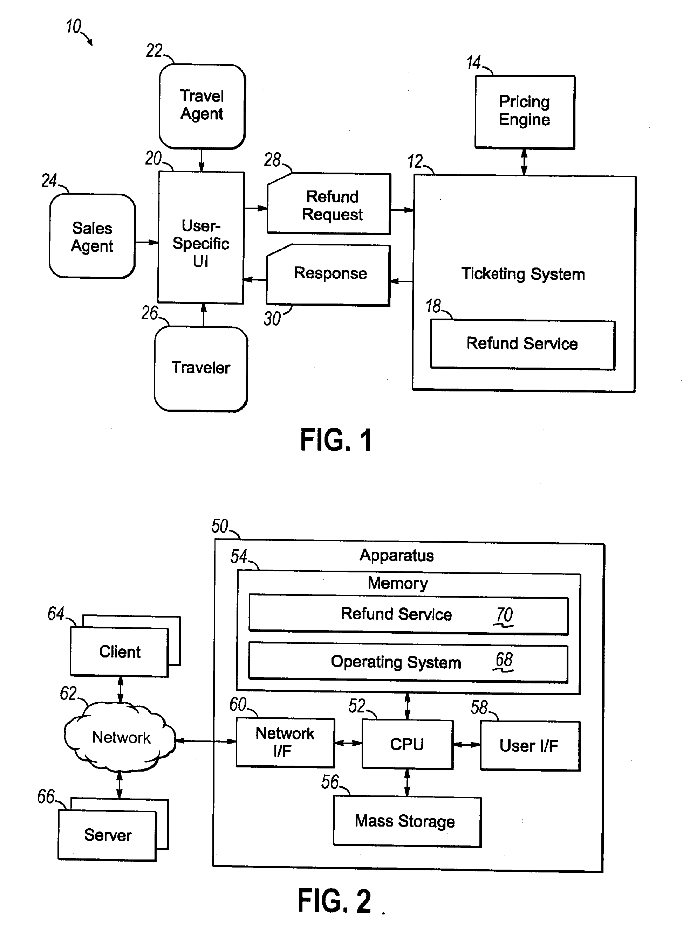

Turning now to the drawings, wherein like numbers denote like parts throughout the several views, Fig. 1 illustrates an example data processing system 10 in which a refund service consistent with the invention may be implemented. System 10 is illustrated as including a central service implemented as ticketing system 12, which is interfaced with various additional travel-related computer services, e.g., a pricing engine 14, and within which is implemented a refund service 18. Pricing engine 14 primarily provides an ability to compute refund amounts for use in pricing a refund, while FOP service 16 primarily provides access to various forms of payment for use in applying a refund to a customer's form of payment. Ticketing system 12 may be implemented, for example, as an electronic ticketing server (ETS) for use in manipulating electronic tickets, including electronic miscellaneous documents (EMD's) associated with ancillary travel-related services. Refund service 18 is implemented within ticketing system 12, and may apply refunds according to one or more rules defined by associated airlines and accessed through a fare publication service such as the Airline Tariff Publishing Company (ATPCO).

It will be appreciated that systems 12, 14 and/or 18 may be combined in some implementations and may be implemented within the same or in different computer systems. Moreover, systems 12, 14 and/or 18 may be operated and/or managed by the same or different entities, e.g., a travel provider or a third party that supports multiple travel providers.

System 12 may be accessible by a number of different types of users through one or more user-specific user interfaces 20, e.g., travel agents 22, sales agents 24 acting on behalf of a travel provider, and travelers 26. It will be appreciated that for different types of users, different user interfaces may be provided, e.g., where a traveler 26 may interact through a simplified web-based interface that requires less expertise than would be assumed for an agent 22, 24. In some embodiments, however, user access may be limited only to agents, or in some embodiments, only to travelers. Users may issue refund requests 28 to ticketing system 12 through user interface 20, and may in turn receive responses 30. User interface 20 may be graphically based, e.g., based upon a web standard such as HTML, or using other interface architectures known in the art, e.g., other client-server interface architectures. Additional administration interfaces may also be supported consistent with the invention. In addition, in some implementations only travel provider representatives may be provided with access to system 12, whereby no access by agents 22 would be supported.

System 12 may be implemented in a number of manners consistent with the invention. Fig. 2, for example, illustrates an example apparatus 50 within which various steps from a refund operation may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, cell phone, set top box, etc.

Computer 50 typically includes a central processing unit 52 including at least one microprocessor coupled to a memory 54, which may represent the random access memory (RAM) devices comprising the main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the Internet, among others) to permit the communication of information with other computers and electronic devices, e.g., one or more client computers 64 (e.g., for interfacing with agents 22, 24 and travelers 26) and one or more servers 66 (e.g., implementing systems 14, and 18 and engine 20). It should be appreciated that computer 50 typically includes suitable analog and/or digital interfaces between CPU 52 and each of components 54, 56, 58 and 60 as is well known in the art. Other hardware environments are contemplated within the context of the invention.

Computer 50 operates under the control of an operating system 68 and executes or otherwise relies upon various computer software applications, components, programs, objects, modules, data structures, etc., e.g., a refund service 70. Moreover, various applications, components, programs, objects, modules, etc. may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

### Refund After Involuntary Exchange

Refund of a travel, or travel-related, document (e.g., an e-ticket, a paper ticket or an EMD) is performed to return to the owner of the document any remaining value to which the owner is due, along with renouncing the corresponding travel-related services (e.g., flights or ancillary services) so that the owner can no longer redeem those services. Generally, the outcome of a refund operation is that the corresponding value is given back to a customer and the corresponding document is flagged as refunded such that it is no longer usable by the customer.

In the embodiments discussed below, refund operations associated with air travel are described, and as such, a travel provider may be an airline. It will be appreciated, however, that the invention may be utilized in connection with other types of travel providers, travel services and forms of travel, including, without limitation, trains, buses, hotels, cruises, and ancillary services related thereto.

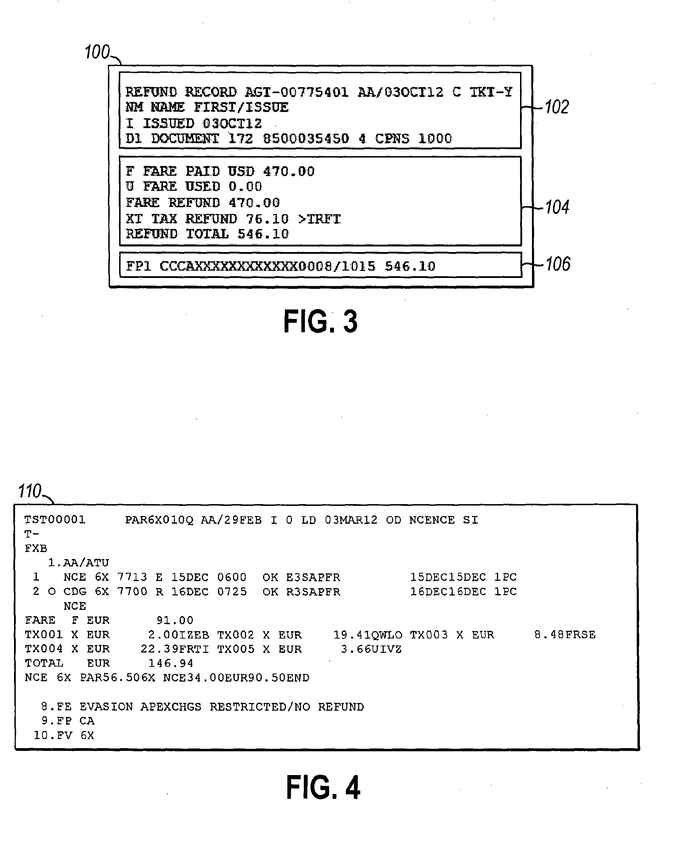

A refund operation in one embodiment may be split into two primary steps: initialing a refund and committing the refund. Fig. 3, for example, illustrates an example refund panel 100 that may be presented to a user such as a travel agent or travel provider agent (e.g., an airline or gate agent) when performing a refund operation, in this case for an e-ticket document.

Panel 100 includes a header 102, which generally includes an agent sign, a date, a traveler name, a date of issue, and a document number. In addition, an upper part 104 of panel 100 details the amounts to be refunded (e.g., fare, tax, penalty, etc.), according to fare rules established by travel providers, as well as coupon statuses (e.g., based on whether coupons are fully unused or partially used). A lower part 106 details one or more Forms of Payment (FOP's) on which the refunded amount will be re-credited to a customer.

Initiation of a refund operation generally includes population of panel 100 to determine an amount to be refunded and Forms of Payment (FOP) on which the amount will be re-credited to a customer, followed by committing the refund operation, which is a confirmation and processing of the refund, accompanied by document updates (sales, coupon statuses, etc.), booking updates, monetary transfers, etc.

Population of upper part 104 of panel 100 may be performed in some embodiments in a number of different manners. For example, population may be based solely on document data, which is used to pre-populate fields in a best effort mode. As a consequence, this does not cover any calculation or penalty determination. Therefore, in many cases, manual updates are expected from agents to update amounts, add penalties. Alternatively, fare filings may be made in a pricing engine and combined with document data, allowing for a more automated population of amounts involved in a refund.

Population of lower part 106 may be based on FOP's identified in a document being refunded and may be expected to be manually updated by an agent in order to adapt their corresponding amounts to be in line with the amount to be refunded.

Embodiments consistent with the invention may be used to automate refunds for travel or travel-related documents, such as e-tickets, paper tickets and EMD's, when such documents are associated with an involuntary change or exchange. In this regard, an involuntary change or exchange may be considered to be any change that is involuntary in nature from the perspective of a customer or traveler, e.g., due to weather conditions, mechanical issues, worker strikes, or other situations where a traveler must be rebooked on a different flight or other form of transportation, typically accompanied by no additional charge to the customer or traveler. In some embodiments, for example, an involuntary change or exchange may be a specific case or scenario defined by a standards organization such as the International Air Transport Association (IATA). One aspect of an involuntary exchange in many instances is that the travel-related document issued after an involuntary exchange will not contain all of the fare or monetary data that would otherwise be required to perform any automated calculation process. (e.g., as per IATA Ticketing Handbook recommendations for involuntary exchanges).

Moreover, it will be appreciated that involuntary exchanges often occur at the last minute and in connection with events that potentially affect numerous travelers, so travel and/or travel provider agents may be burdened with a substantial workload while travelers wait in long lines to reschedule their trips, e.g., due to massive flight cancellations. Desirably, therefore, any agent actions associated with exchanging a former document with a new document would be very fast and minimal so as to minimize the impact on travelers, so embodiments consistent with the invention may utilize automation to reduce the amount of time required to process a refund associated with such events. It will be appreciated that, in many instances, involuntary exchanges will be associated with proportionately greater numbers of requests for refunds, as travelers subject to involuntary exchanges may seek to make alternate travel arrangements and receive refunds on their original travel documents.

In addition, automating a refund operation after an involuntary exchange, e.g., to reduce or eliminate the need to manually update or otherwise perform computations to a refund panel or record, may in some embodiments reduce the amount of training and/or expertise of agents and other end users, and further reduces the likelihood of agent miscalculations that would otherwise result in a need to perform an ADM (Agency Debit Memo), e.g., should a revenue accounting system of an airline detect that a wrong refund has been applied, it may issue an ADM and address it to a travel agency, exposing a travel agency to penalties. In fact, in some instances, refund amounts may be calculated in an automatic manner by a pricing engine, and as a result, the amounts may be considered guaranteed, such that a travel agent, for example, may not be subject to ADM as a result of any miscalculations in a refund amount.

Moreover, in some instances, simplification and automation of the refund process may facilitate the implementation of online refunds directly to customers, rather than through agents.

The case of an involuntary exchange presents a challenge to automating a refund operation, as should be apparent from the following scenario. In this scenario, an original document is considered to be a document, e.g., an e-ticket, that a customer or traveler possessed prior to a disruption and the reissue of an involuntary exchange. A document to be refunded refers to the document resulting from the involuntary exchange, and for which the customer or traveler requests a refund.

In the absence of an involuntary exchange, e.g., for an original document or voluntarily exchanged document, and with continued reference to Fig. 3, a refund operation may be performed in part by: (1) filling header 102 of refund panel 100 with the data retrieved from the document to be refunded; (2) computing the amounts to be refunded based upon pricing data extracted from the document to be refunded and filling upper part 104 of refund panel 100 with the computed amounts; and (3) retrieving FOP's from the sale of the document to be refunded and filling in the lower part 106 of refund panel 100 with the retrieved FOP's. Computing the amounts to be refunded may be performed by extracting specific pricing data from the document to be refunded and accessing a pricing server to retrieve fare rules used during the issuance process of the document to be refunded. So, for example, based on ATPCO Cat33/Cat16 fare rules, the fares and taxes may be automatically calculated for partially flown documents, and cancellation penalties, if any, may be applied.

However, in the case of documents that are associated with involuntarily changes, automated refund operations cannot be completed because at least a portion of the data in such documents will generally be "false" to the extent that it is the original document, rather than the involuntary exchange document, that holds the relevant monetary data. Since the customer or traveler is not charged as a result of an involuntary exchange, the monetary data in particular associated with an involuntary exchange document will be inconsistent with the actual monetary data that was used when purchasing the original document. In fact, as will be discussed in greater detail below, the presence of false data in an involuntary exchange document is by design to simplify and accelerate the exchange process and reduce the burden on agents.

Generally in such instances an agent is required to refund an involuntary exchange document with a manual refund process, requiring the agent to manually compute all amounts and penalties. In addition, the involuntary exchange document generally will not contain any FOP, so the agent will also have to add one or more FOP's manually in order to complete the refund operation. The overall operation is complex and prone to human error, and particularly in the event that an involuntary exchange is associated with a large scale disruption, time consuming at a time when numerous travelers may be waiting for help.

In the herein-described embodiments, documents resulting from involuntary exchanges will generally have false fare and tax information by construction. Indeed, in the case of a disruption affecting air travel, the goal is generally to transfer customers from one flight to another, which means avoiding computations and time consuming actions from agents. Therefore, recommendations generally ask for all fare and tax information to be copied from the original document to the one being issued, whatever the content of this new document is in terms of flights or other services.

For these types of documents, however, certain information is typically missing from the new document, or cannot be relied upon. For example, no relevant monetary amount may exist, and no FOP may be present in the new document. As an example, Fig. 4 illustrates an example original document 110 including two coupons, a first associated with a flight from NCE (Nice) to CDG (Charles de Gaulle), and a second associated with a return flight from CDG to NCE. Assume that the first flight segment is disrupted due to a strike, so the traveler is rerouted to a new itinerary: NCE to FRA (Frankfurt) and FRA to CDG. An involuntary exchange has occurred, and a new document is issued, resulting in the original document 110 having the coupon associated with the segment from NCE to CDG marked with a coupon status of "Exchanged" and with the coupon associated with the segment from CDG to NCE retaining an "Open" (unused) coupon status.

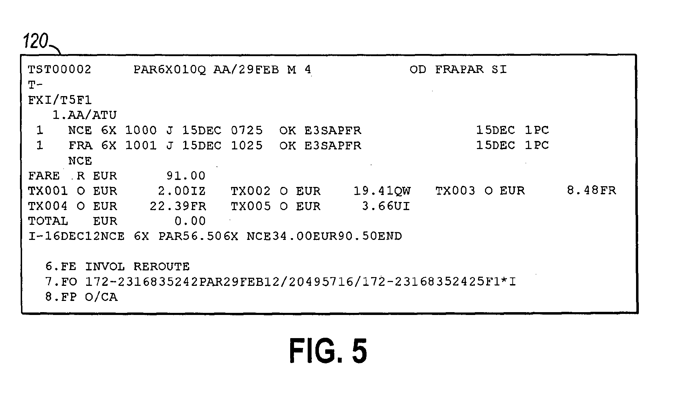

The new document, referred to herein as an involuntary exchange document, will include two coupons, the first associated with the segment from NCE to FRA, and the second associated with the segment from FRA to CDG. Generally, the monetary data associated with the new document will be as shown at 120 in Fig. 5, with the fare amount and fare calculation being those of original document 110 (with the fare calculation preceded by "I-" for Involuntary), with the taxes being those of original document 110 (flagged as "O" for Old), and with additional collection set to "0", since the customer is not charged for the involuntary exchange. Since no charge is associated with the change, no new FOP is required to reissue the document, and a dedicated endorsement line may be associated with the pricing record ("INVOL REROUTE").

To address the discontinuity among the monetary data in the new document, embodiments consistent with the invention retrieve monetary data from the original document in connection with performing a refund calculation. In addition, embodiments consistent with the invention may update the status of both the original and new (involuntary exchange) documents to "refunded" in connection with a refund operation to ensure that the status of all associated documents for a customer or traveler are maintained consistent as a result of an involuntary exchange and subsequent refund.

In this regard, the monetary data or information that may be accessed may include the cost or fare for each service associated with each EMD coupon, the payment or payments made by the customer or traveler, the forms of payment used to make the payments, the types of currency, etc. Alternatively, some or all of the monetary data may be determined by the pricing engine (e.g., fare paid, fare used, taxes paid, taxes used, penalties, etc.)

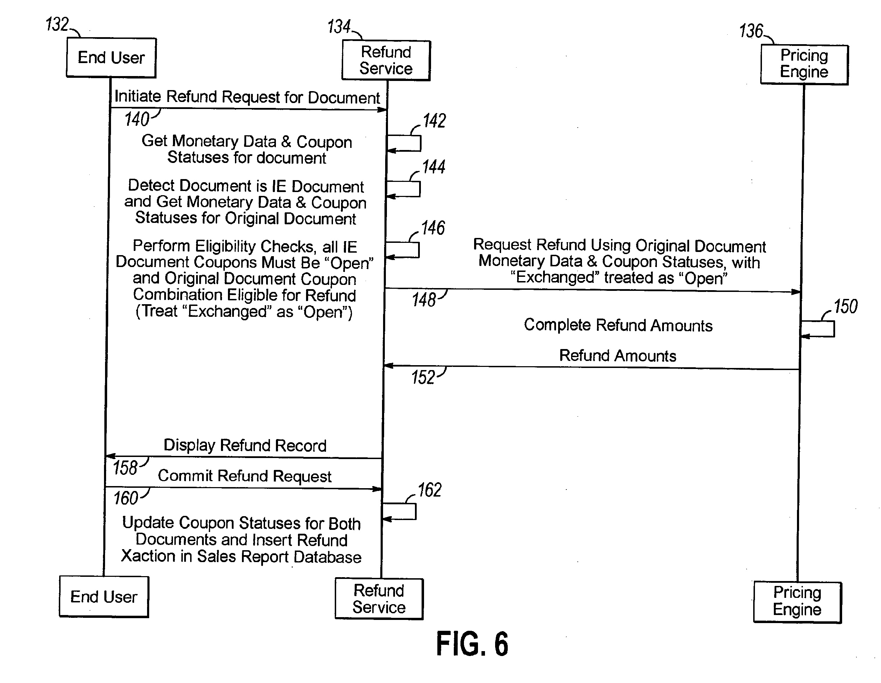

Fig. 6 illustrates an example implementation of an automated refund operation capable of being implemented in data processing system 10 of Fig. 1, and showing the interaction of an end user 132 with a refund service 134 having access to a pricing engine 136, and in connection with requesting a refund for an involuntary exchange document, i.e., a travel document associated with an involuntary change or exchange. The overall flow is based in part upon the fact that the involuntary exchange document generally does not include all exploitable information required to perform a refund, and thus, the flow implements a refund amounts calculation that is not based on the data contained in the involuntary exchange document to be refunded, but rather, on the data contained in an original document. In addition, at the end of the process, both documents (original and involuntary exchange) are updated to a refunded status, despite the fact that typically only one document is asked to being refunded by an agent. In addition, a number of checks are performed to ensure a consistent result.

In the illustrated embodiment, a number of preconditions exist for an automated refund. First, it is assumed that the refund takes place after an involuntary exchange that impacts only part of the remaining open coupons of a document. A document resulting from an involuntary exchange may be identified by several elements, e.g., based on a ticketing handbook (where fare information is shown as taken from the original document, where taxes are identified as "Old", or where an ADC field is "0," among others), or based on vendor-specific indicators, such as an "I-" indication at the beginning of a fare calculation. Such documents may be priced manually, or using an automated involuntary document exchange tool.

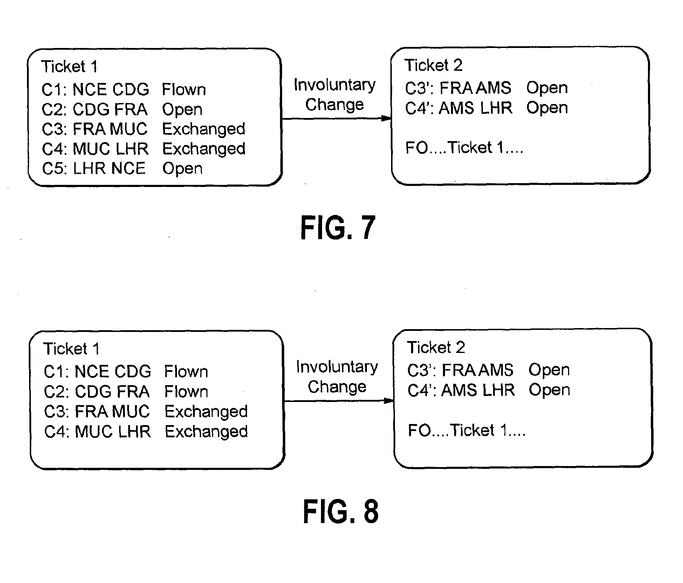

Two situations may exist for an involuntary exchange document. In the first, not all remaining coupons may be impacted by disruption, while in the second, all remaining coupons are impacted by the disruption. Figs. 7 and 8, for example, respectively illustrate the former and latter situations. In the partially-impacted document of Fig. 7, coupon C1 has a status of "Flown" (i.e., used), coupons C2 and C5 are "Open" (i.e., as yet unused), and coupons C3 and C4 have a status of "Exchanged" as a result of an involuntary exchange to coupons C3' and C4' of Document 2. In the completely-impacted document of Fig. 8, coupons C1 and C2 have a status of "Flown" while coupons C3 and C4 have a status of "Exchanged" as a result of an involuntary exchange to coupons C3' and C4' of Document 2.

It will be appreciated that the relevant monetary amounts and fare information are maintained in each Document 1, while each Document 2 contains monetary amounts and fare information that are not in line with the coupons identified therein. In addition, a refund operation consistent with the invention is directed to Document 2, as a refund for Document 1 merely requires treating each coupon with an "Exchanged" status as "Flown" (i.e., used).

As a prerequisite of a refund in the illustrated embodiment, each Document 2 should only be refunded if all coupons of Document 1 after those impacted by the disruption (e.g., C5 in Fig. 7) are still open. In addition, if a chain of involuntary exchanges exist (e.g., if Document 2 is involuntarily exchanged with a Document 3 (not shown), a refund operation may work its way up the chain to obtain relevant monetary information from the original Document 1.

Returning now to Fig. 6, a refund operation may be implemented as two primary steps, an initiate refund step (initiated, for example, via an informative refund request) and a confirm refund step (initiated, for example, via a confirmative refund request), with the latter being performed after a refund record is displayed to an end user (e.g., an agent or customer). The initiate refund step, which begins in step 140, is initiated by an end user 132 via a request to refund service 134 identifying the document to be refunded (e.g., Document 2 in Figs. 7 and 8).

As per other types of refunds, a message may be sent to an Electronic Ticketing Server (ETS) that hosts the document being refunded and to a ticketing database to retrieve the monetary data for the document (step 142). Next, in step 144, the refund service may detect that the document is an involuntarily exchanged (IE) document (e.g., based on an "I-" designated in the fare calculation and the presence of an FO line), and based on this detection, the monetary data for the original document (here, Document 1) may be retrieved from the ETS and ticketing database. Next, in step 146, preliminary checks may be performed to determine that all of the coupons of the IE document are unused (i.e., have an "Open" status) and that the original document coupon combination is eligible for a refund, while treating all coupons with an "Exchanged" status as having an "Open" status instead.

Next, in step 148, the document data of the original document is sent to pricing engine 136, with the coupons having the "Exchanged" status treated as "Open". Thus, from the perspective of the pricing engine, the pricing engine attempts to calculate a refund amount as if the "Exchanged" coupons were still "Open" coupons (step 150). Then, the refund amount information is returned to refund service 134 (step 152), enabling the upper part of a refund panel to be filled, including any refunded taxes and/or penalties.

Next, the lower part of the refund panel may be filled, e.g., with the FOP(s) belonging to the original document, and refund service 134 may then display the refund panel to the end user (step 158).

Once the refund panel is displayed to the end user, the end user may confirm the refund by sending a commit refund request to refund service 134 (step 160) to process the refund transaction. At this time, the open for use coupon statuses in both the original (if there is a remaining open for use coupon) and IE document are updated and a refund transaction is inserted in a sales report database (step 162), and the refund operation is complete. If any of the aforementioned steps fails, the refund process may halt and perform a rollback to revert the coupon statuses to their prior states.

In the illustrated embodiment, as a result of the refund operation, the coupons in the IE document are updated to a "Refunded" status, and a refund transaction associated with the IE document is inserted in the sales report database, generally including a monetary refund amount and any refund FOP(s). In addition, an Amadeus Interface Record (AIR) message may be sent to a back office application, and a document part of an associated PNR (if present) may be updated to a "Refunded" status. From the perspective of the original document, if any coupons still have an "Open" status, they are updated to a "Refunded" status. In addition, a refund transaction associated with the original document may be inserted in the sales report database with an associated amount set to zero. In addition, as with the IE document, an AIR message may be sent to a back office application, and a document part of an associated PNR (may be updated to a "Refunded" status.

As an additional matter, in the case of multiple consecutive involuntary exchanges, e.g., where N represents the last document involuntary exchanged and K represents the last document issued voluntarily, the refund service may provide document K data to the pricing engine, leading to the processing of N-K zero refund transactions (if any).

Overall, the methodologies described herein are characterized by the following points:
1. A method of performing an automated refund for an involuntary exchange document, comprising:
   in response to a request to initiate a refund for a travel document, determining that the travel document is an involuntary exchange document using at least one processing unit;
   accessing monetary information for an original document from which the involuntary exchange document was generated using the at least one processing unit; and
   automatically determining, using the at least one processing unit, a refund amount for the involuntary exchange document based upon the accessed monetary information for the original document.
2. The method of point 1, further comprising automatically updating a status of at least one coupon associated with the involuntary exchange document to indicate that the at least one coupon has been refunded.
3. The method of point 1 or point 2, further comprising automatically updating a status of at least one coupon associated with the original document to indicate that the at least one coupon has been refunded.
4. The method of point 3, wherein the original document is associated with a first, exchanged coupon and a second, unused coupon, and wherein updating the status of at least one coupon associated with the original document includes updating the status of the second coupon to indicate that the second coupon has been refunded.
5. The method of points 2 to 4, further comprising inserting a refund transaction in a sales report database.
6. The method of points 1 to 5, wherein automatically determining the refund amount includes:
   accessing a pricing engine using the accessed monetary information for the original document; and
   receiving the refund amount from the pricing engine, wherein the refund amount is calculated by the pricing engine based on the accessed monetary information.
7. The method of point 6, wherein accessing the pricing engine includes communicating a status of at least one coupon associated with the involuntary exchange document to the pricing engine, wherein the pricing engine calculates the refund amount based at least in part on the status.
8. The method of point 7, further comprising determining the status for the at least one coupon associated with the involuntary exchange document based upon a status of at least one coupon associated with the original document, wherein the at least one coupon associated with the original document has an exchanged status, and wherein determining the status includes overriding the exchanged status of the at least one coupon associated with the original document to an open status when accessing the pricing engine.
9. The method of points 1 to 8, further comprising populating a refund record for the involuntary exchange document, the refund record including a fare paid, a fare used, a fare refund, taxes paid, taxes used, nonrefundable taxes, refundable taxes, a penalty, a refund total or combinations thereof.
10. The method of points 1 to 9, wherein the refund amount is guaranteed.
11. The method of points 1 to 10, further comprising applying the determined refund amount to at least one Form of Payment, briefly FOP, associated with the involuntary exchange document.
12. The method of point 11, further comprising determining the at least one FOP by accessing the original document.
13. The method of points 1 to 13, wherein the involuntary exchange document is issued in response to an event selected from the group of flight delay, flight cancelation, weather, strike, war or terrorism.
14. The method of points 1 to 13, further comprising processing a refund for both the involuntary exchange document and the original document in response to the request.
15. The method of points 1 to 14, wherein the request is a first, informative refund request, and wherein the method further comprises, in response to a second, confirmative refund request:
   updating a status of the original document and a status of the involuntary exchange document to a refunded status; and
   inserting at least one refund transaction in a sales report database.
16. An apparatus, comprising:
   at least one processing unit; and
   program code configured upon execution by the at least one processing unit to perform an automated refund for an involuntary exchange document, by, in response to a request to initiate a refund for a travel document, determining that the travel document is an involuntary exchange document, accessing monetary information for an original document from which the involuntary exchange document was generated, and automatically determining a refund amount for the involuntary exchange document based upon the accessed monetary information for the original document.
17. The apparatus of point 16, wherein the program code is further configured to automatically update a status of at least one coupon associated with the involuntary exchange document to indicate that the at least one coupon has been refunded.
18. The apparatus of point 16 or point 17, wherein the program code is further configured to automatically update a status of at least one coupon associated with the original document to indicate that the at least one coupon has been refunded.
19. The apparatus of points 16 to 18, wherein the program code is configured to automatically determine the refund amount by accessing a pricing engine using the accessed monetary information for the original document, and receiving the refund amount from the pricing engine, wherein the refund amount is calculated by the pricing engine based on the accessed monetary information.
20. The apparatus of point 19, wherein the program code is further configured to determine a status for at least one coupon associated with the involuntary exchange document based upon a status of at least one coupon associated with the original document and communicate the status of the at least one coupon associated with the involuntary exchange document to the pricing engine, wherein the at least one coupon associated with the original document has an exchanged status, and wherein the program code is configured to determine the status by overriding the exchanged status of the at least one coupon associated with the original document to an open status when accessing the pricing engine.
21. The apparatus of points 16 to 20, wherein the program code is further configured to apply the determined refund amount to at least one Form of Payment, briefly FOP, associated with the involuntary exchange document.
22. The apparatus of points 16 to 21, wherein the program code is further configured to process a refund for both the involuntary exchange document and the original document in response to the request.
23. The apparatus of points 16 to 22, wherein the request is a first, informative refund request, and wherein the program code is further configured to, in response to a second, confirmative refund request:
   update a status of the original document and a status of the involuntary exchange document to a refunded status; and
   insert at least one refund transaction in a sales report database.
24. A program product, comprising:
   a non-transitory computer readable medium; and
   program code stored on the non-transitory computer readable medium and configured upon execution by at least one processing unit to perform an automated refund for an involuntary exchange document, by, in response to a request to initiate a refund for a travel document, determining that the travel document is an involuntary exchange document, accessing monetary information for an original document from which the involuntary exchange document was generated, and automatically determining a refund amount for the involuntary exchange document based upon the accessed monetary information for the original document.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

## Claims

1. A method of performing an automated refund for an involuntary exchange document, comprising:
in response to a request to initiate a refund for a travel document, determining that the travel document is an involuntary exchange document using at least one processing unit;
accessing monetary information for an original document from which the involuntary exchange document was generated using the at least one processing unit; and
automatically determining, using the at least one processing unit, a refund amount for the involuntary exchange document based upon the accessed monetary information for the original document.

2. The method of claim 1, further comprising automatically updating a status of at least one coupon associated with the involuntary exchange document to indicate that the at least one coupon has been refunded.

3. The method of claim 1 or claim 2, further comprising automatically updating a status of at least one coupon associated with the original document to indicate that the at least one coupon has been refunded.

4. The method of claim 3, wherein the original document is associated with a first, exchanged coupon and a second, unused coupon, and wherein updating the status of at least one coupon associated with the original document includes updating the status of the second coupon to indicate that the second coupon has been refunded.

5. The method of any one of claims 2 to 4, further comprising inserting a refund transaction in a sales report database.

6. The method of any one of claims 1 to 5, wherein automatically determining the refund amount includes:
accessing a pricing engine using the accessed monetary information for the original document; and
receiving the refund amount from the pricing engine, wherein the refund amount is calculated by the pricing engine based on the accessed monetary information.

7. The method of claim 6, wherein accessing the pricing engine includes communicating a status of at least one coupon associated with the involuntary exchange document to the pricing engine, wherein the pricing engine calculates the refund amount based at least in part on the status.

8. The method of claim 7, further comprising determining the status for the at least one coupon associated with the involuntary exchange document based upon a status of at least one coupon associated with the original document, wherein the at least one coupon associated with the original document has an exchanged status, and wherein determining the status includes overriding the exchanged status of the at least one coupon associated with the original document to an open status when accessing the pricing engine.

9. The method of any one of claims 1 to 8, further comprising populating a refund record for the involuntary exchange document, the refund record including a fare paid, a fare used, a fare refund, taxes paid, taxes used, nonrefundable taxes, refundable taxes, a penalty, a refund total or combinations thereof.

10. The method of any one of claims 1 to 9, further comprising applying the determined refund amount to at least one Form of Payment, referred to as FOP, associated with the involuntary exchange document.

11. The method of claim 10, further comprising determining the at least one FOP by accessing the original document.

12. The method of any one of claims 1 to 11, further comprising processing a refund for both the involuntary exchange document and the original document in response to the request.

13. The method of any one of claims 1 to 12, wherein the request is a first, informative refund request, and wherein the method further comprises, in response to a second, confirmative refund request:
updating a status of the original document and a status of the involuntary exchange document to a refunded status; and
inserting at least one refund transaction in a sales report database.

14. An apparatus, comprising:
at least one processing unit; and
program code configured upon execution by the at least one processing unit to perform an automated refund for an involuntary exchange document, by, in response to a request to initiate a refund for a travel document, determining that the travel document is an involuntary exchange document, accessing monetary information for an original document from which the involuntary exchange document was generated, and automatically determining a refund amount for the involuntary exchange document based upon the accessed monetary information for the original document.

15. A program product, comprising:
a non-transitory computer readable medium; and
program code stored on the non-transitory computer readable medium and configured upon execution by at least one processing unit to perform an automated refund for an involuntary exchange document, by, in response to a request to initiate a refund for a travel document, determining that the travel document is an involuntary exchange document, accessing monetary information for an original document from which the involuntary exchange document was generated, and automatically determining a refund amount for the involuntary exchange document based upon the accessed monetary information for the original document.
